# EUROPÄISCHE PATENTSCHRIFT

(11) **EP 3 078 044 B1**
(45) Veröffentlichungstag und Bekanntmachung des Hinweises auf die Patenterteilung: **12.02.2020**
(21) Anmeldenummer: 14809350.3
(22) Anmeldetag: 03.12.2014
(51) Int. Cl.: H01H 9/00, H01F 29/04, H02P 13/06

(54) **SCHALTANORDNUNG**
SWITCHING DEVICE
ENSEMBLE DE COUPURE

(30) Priorität: 05.12.2013 DE 102013113505; 03.06.2014 DE 102014107795
(43) Veröffentlichungstag der Anmeldung: 12.10.2016
(73) Patentinhaber: Maschinenfabrik Reinhausen GmbH, 93059 Regensburg (DE)
(72) Erfinder: KIRCHNER, Laurenc, 93049 Regensburg (DE); SPÄTH, Matthias, 93059 Regensburg (DE); SHEIKO, Stanislav, 85221 Dachau (DE)
(86) Internationale Anmeldenummer: PCT/EP2014/076383
(87) Internationale Veröffentlichungsnummer: WO 2015/082531

(56) Entgegenhaltungen:
- EP-A1- 0 510 474
- DE-B3-102007 023 124
- DE-C1- 10 102 310
- DE-U1-202011 005 058

## Beschreibung

Die Erfindung betrifft eine Schaltanordnung.

DE 20 2011 005 058 U1 beschreibt einen Transformator mit Stellvorrichtung. Dieser umfasst eine dreiphasige Primärwicklung, eine dreiphasige erste Sekundärwicklung sowie eine dreiphasige zweite Sekundärwicklung mit Stufenverstellung. Jede Sekundärwicklung weist eine Gruppe von drei Einzelwicklungen auf. Dabei sind drei unabhängige Schaltmittel vorgesehen, mittels der die Gruppen der Einzelwicklungen der ersten und der zweiten Sekundärwicklung unterschiedlich verbindbar sind.

Derartige Schaltmittel sind auf Grund der vielen Kontakte kompliziert und aufwendig aufgebaut, sodass eine korrekte Inbetriebnahme eine große Herausforderung darstellt. Weiterhin ist die separate Ansteuerung und Betätigung der jeweiligen Schaltmittel nicht nur teuer, sondern auch komplex. Außerdem nimmt der Einbau einzelner Schaltmittel besonders viel Bauraum in den einzelnen Umspannern ein, sodass diese zu groß für einen einfachen Transport werden.

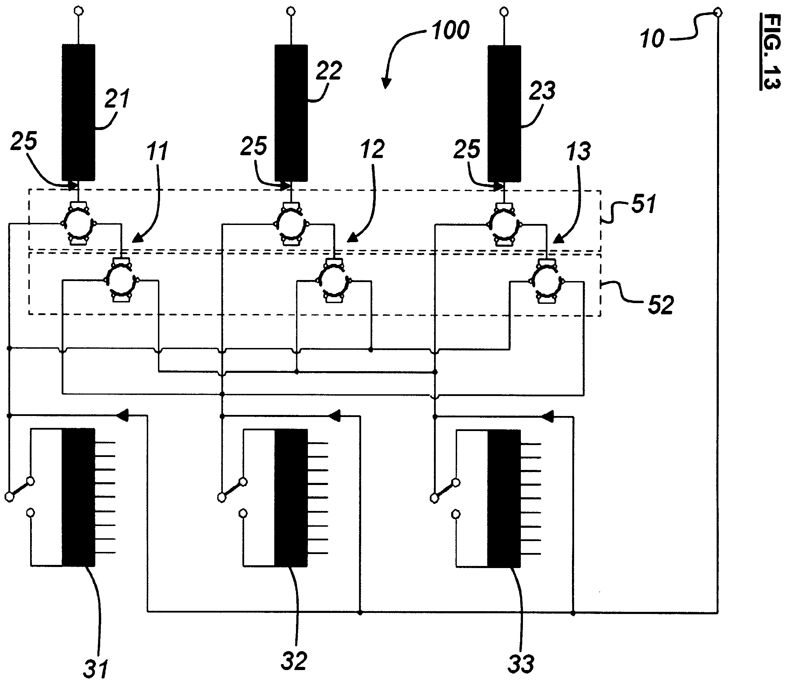

Eine Schaltanordnung zum Schalten einer von mindestens drei Wicklungen während des Transformatorbetriebes auf mindestens eine Stammwicklung einer Phase des Transformators ist unter der Bezeichnung "Advanced Retard Switch", kurz ARS, aus der Firmendruckschrift der Anmelderin "Advanced-Retard-Switch (ARS), Betriebsanleitung BA 274/01", Druckimpressum BA 274/01de, 0605, Veröffentlichungsdatum Juni 2005, bekannt und in FIG. 13 schematisch dargestelt. Für jede zu schaltende Phase ist mindestens ein Abschnitt vorgesehen. In jedem Abschnitt sind für jede zu schaltende Phase feste Kontakte angeordnet. Die festen Kontakte sind in jedem Abschnitt durch jeweils einen beweglichen Schaltkontakt wahlweise beschaltbar, der jeweils auf einem Schaltmechanismus befestigt ist. Diese Schaltanordnung kann für unterschiedliche Anwendungen in Kombination mit einem Laststufenschalter eingesetzt werden. Vorrangig wird sie zum Umpolen der Regelspannung bei Anwendungen mit großem Regelbereich genutzt, wie z. B. bei Phasenschiebertransformatoren. Sie führt dabei die Funktion eines Doppelwenders aus.

DE 1 788 013 C beschreibt einen Stufenwähler für einen Stufentransformator mit einem zusätzlichen Wender zur Erhöhung der Zahl der möglichen Spannungsstufungen. Hierbei sind die beweglichen Wenderkontakte jeweils in Segmenten um die Wählersäule herum in einem Traggestell angeordnet. Durch die segmentartige Ausbildung können sie jeweils eine Verbindung zwischen einem mittleren Wenderkontakt und wahlweise einem von zwei weiteren Wenderkontakten herstellen. Das Traggestell besteht dabei aus mehreren senkrechten Isolierstäben und oberen und unteren Hebelarmen. Diese bekannte Anordnung bezieht sich jedoch auf einen Wender an einem Stufenwähler, nicht aber auf eine Schaltanordnung der eingangs genannten, als "Advanced Retard Switch" bezeichneten Art.

DE 1 249 990 B beschriebt einen Sternpunktdrehumsteller für mehrphasige Stufentransformatoren, bei dem die festen Kontakte in mehreren horizontalen, den einzelnen Phasen des Transformators zugeordneten Ebenen kreisförmig um eine zentrische Umstellerwelle herum angeordnet sind. Diese Umstellerwelle trägt die beweglichen Kontakte, die aus U-förmigen Flachbügeln bestehen, die ihrerseits jeweils zwei benachbarte feste Kontakte elektrisch leitend verbinden. Als "Advanced Retard Switch" ist dieser Sternpunktdrehumsteller, der zur lastlosen Umschaltung zwischen Wicklungsanzapfungen dient, nicht geeignet.

DE 10 2007 023 124 A1 beschreibt eine Schaltanordnung mit zwei Betriebsstellungen zum Umschalten einer Wicklung während des Transformatorbetriebes, wobei bei der Umschaltung ein Durchgangsstrom von einem Strompfad auf einen anderen Strompfad kommutiert. Dabei sind in mehreren horizontalen Ebenen auf einem Isolierstoffgerüst feste Kontakte um eine drehbare Schaltwelle herum angeordnet. Die Kontakte weisen obere und untere Kontaktfinger auf, die auseinanderdrückbar sind und von einer elektrisch leitenden Schiene als beweglichem Schaltkontakt beschaltbar sind.

EP 0 510 474 A1 beschreibt einen dreiphasigen Transformator mit einer Einstellvorrichtung zur Einstellung der Phasenverschiebung zwischen den Spannungen zweier Drehstromnetze. Der Transformator hat beispielsweise Primärwicklungen, welche jeweils eine Stammwicklung und eine Stufenwicklung umfassen. Die Einstellvorrichtung beinhaltet Wählerschalter. Die Wählerschalter sind dazu eingerichtet, jeweils eine Stufenwicklung von einer Nachbarphase einer gegebenen Stammwicklung zu einer anderen Nachbarphase im Sinne einer zyklischen Vertauschung umzuschalten.

DE 101 02 310 C1 betrifft einen Thyristor-Stufenschalter zur unterbrechungslosen Umschaltung zwischen verschiedenen Wicklungsanzapfungen eines Stufentransformators unter Last, bestehend aus einem mechanischen Stufenwähler zur leistungslosen Vorwahl der jeweiligen Wicklungsanzapfung, auf die umgeschaltet werden soll, und einem Lastumschalter mit Thyristoren als Schaltmittel zur eigentlichen unterbrechungslosen Umschaltung von der bisherigen auf die vorab angewählte neue Wicklungsanzapfung unter Last.

Aufgabe der Erfindung ist es eine Schaltanordnung zu schaffen, die wartungsfreundlich und einfach zu Verschalten beziehungsweise Verdrahten ist und eine kompakte Bauweise besitzt.

Diese Aufgabe wird durch den Gegenstand des unabhängigen Anspruchs gelöst. Vorteilhafte Weiterbildungen und Ausführungsformen der Erfindungen sind in den abhängigen Ansprüchen beschrieben.

Die Erfindung schlägt eine Schaltanordnung zum Schalten einer von mindestens drei Regelwicklungen während des Transformatorbetriebes auf jeweils eine von drei Stammwicklungen einer Phase vor, wobei
- für jede zu schaltende Phase mindestens ein Abschnitt vorgesehen ist, in dem feste Kontakte angeordnet sind;
- die festen Kontakte in jedem Abschnitt durch jeweils einen beweglichen, Schaltkontakt, der jeweils auf einem Schaltmechanismus befestigt ist, wahlweise beschaltbar sind;
- eine erste elektrische Leitung, eine zweite elektrische Leitung und eine dritte elektrische Leitung die Kontakte in jedem Abschnitt derart leitend verbindet, dass die Kontakte der verschiedenen Abschnitte mittels der ersten, zweiten und dritten elektrischen Leitung jeweils einmal kontaktiert sind.

Die Schaltanordnung hat eine erste elektrische Leitung, eine zweite elektrische Leitung und eine dritte elektrische Leitung, die Kontakte in jedem Abschnitt der Schaltanordnung derart verbinden, dass die Kontakte in den verschiedenen Abschnitten mittels der ersten, zweiten und dritten elektrischen Leitung jeweils einmal kontaktiert sind.

Die jeder Stammwicklung über die jeweiligen Abschnitte der Schaltanordnung zuordenbaren Regelwicklungen können nach Bedarf auf beliebige Art und Weise ausgebildet sein, beispielsweise in Linearschaltung, Wenderschaltung oder Grobwähler-Feinwähler-Schaltung. Jede Regelwicklung umfasst bevorzugt eine Vielzahl von Anzapfungen, mit denen eine feine Einstellung möglich ist.

Die Schaltanordnung kann bei einem Transformator mit je einer Stammwicklung pro Phase angewendet werden. Ebenso ist denkbar, dass für jede Phase ein separater Transformator vorgesehen ist. Mittels der Abschnitte der Schaltanordnung werden dann die einzelnen Regelwicklungen der entsprechenden Stammwicklung des Transformators der jeweiligen Phase zugeschaltet.

Durch die Schaltanordnung kann gemäß einer möglichen Ausführungsform eine Regelung mit einem einzigen beweglichen Schaltkontakt pro Abschnitt erreicht werden. Hinzu kommt, dass die Fehlergefahr durch eine fehlerhafte Verschaltung bzw. Verdrahtung erheblich sinkt beziehungsweise komplett ausgeschlossen ist. Bei einem dreiphasigen ARS kann ein Großteil der Leitungsführung durch Brücken zwischen den Abschnitten am ARS ersetzt werden.

Ein Vorteil der vorgeschlagenen Schaltanordnung ist, dass ein Transformator, bei dem die Schaltanordnung eingebaut wird, erheblich kompakter gebaut werden kann. Dies führt zu Einsparungen bei Material für den Kessel und auch beim Ölvolumen im Kessel. Bei gleichem Bauvolumen kann theoretisch eine größere Leistung erreicht werden. Hinzu kommt, dass die Komplexität der Leitungsführung und Verschaltung sinkt.

Jeder bewegliche Schaltkontakt kann nach Bedarf auf beliebige Art und Weise ausgebildet sein und beispielsweise eine Kupferschiene umfassen.

Es kann vorgesehen sein, dass
- die erste Stammwicklung über eine feste Verdrahtung mit dem ersten Abschnitt verbunden ist oder werden kann;
- die zweite Stammwicklung über eine feste Verdrahtung mit dem zweiten Abschnitt verbunden ist oder werden kann;
- die dritte Stammwicklung über eine feste Verdrahtung mit dem dritten Abschnitt verbunden ist oder werden kann;
- mit dem Schaltmechanismus der ersten Stammwicklung oder der zweiten Stammwicklung oder der dritten Stammwicklung die erste Regelwicklung oder die zweite Regelwicklung oder die dritte Regelwicklung leitend verbindbar ist.

Es kann vorgesehen sein, dass
- jeder der drei Abschnitte eine leitende Wählerbrücke aufweist, die über die Verdrahtung mit der jeweiligen Stammwicklung verbunden ist oder werden kann.

Es kann vorgesehen sein, dass
- die erste elektrische Leitung jeweils einen Kontakt eines jeden Abschnitts verbindet, die zweite elektrische Leitung jeweils einen Kontakt eines jeden Abschnitts verbindet und die dritte elektrische Leitung jeweils einen Kontakt eines jeden Abschnitts verbindet.

Es kann vorgesehen sein, dass
- ein allen Abschnitten gemeinsames Isolierstoffgerüst aus mehreren Kontaktstäben vorgesehen ist und zumindest einige der Kontaktstäbe die festen Kontakte tragen.

Vorzugsweise sind die Kontaktstäbe um die Schaltwelle herum angeordnet, wobei sechs der Kontaktstäbe die festen Kontakte für die Abschnitte tragen.

Es kann vorgesehen sein, dass
- der Schaltmechanismus eine drehbare Schaltwelle ist oder umfasst, auf der die entsprechenden Abschnitte zentrisch angeordnet sind.

Vorzugsweise sind in axialer Richtung der drehbaren Schaltwelle die entsprechenden Abschnitte in Reihe bzw. übereinander angeordnet.

Es kann vorgesehen sein, dass
- jede Wählerbrücke eine innere Wählerbrücke ist, die einen ersten Arm, einen zweiten Arm und einen dritten Arm aufweist, die insbesondere jeweils unter einem Winkel zueinander angeordnet sind;
- der erste Arm über die feste Verdrahtung mit der jeweiligen Stammwicklung verbunden ist oder werden kann.

Bevorzugt ist der Winkel der Arme untereinander 120°.

Es kann vorgesehen sein, dass
- die Abschnitte übereinander in Richtung einer Achse der Schaltwelle angeordnet sind.

Es kann vorgesehen sein, dass
- wenigstens einer der Schaltkontakte bogenförmig ausgebildet ist.

Es ist für eine drehende Schaltbewegung von Vorteil, wenn der bewegliche Schaltkontakt bogenförmig ausgebildet ist.

Es kann vorgesehen sein, dass
- wenigstens einer der Schaltkontakte einen Kreisbogen derart bildet, dass der Schaltkontakt drei aufeinanderfolgende Kontakte des jeweiligen Abschnitts über Kontaktfinger der Kontakte kontaktiert.

In Abhängigkeit von der Größe und Form der Kontakte beschreibt der Kreisbogen bevorzugt einen Winkel, der sich im Bereich von 120° bewegt. Eine Abweichung von ±10° ist möglich, wenn dies die Ausgestaltung der festen Kontakte zulässt.

Es kann vorgesehen sein, dass
- der Schaltkontakt des ersten Abschnitts zum Schaltkontakt des zweiten Abschnitts in einer Umfangsrichtung um 120° versetzt ist;
- der Schaltkontakt des zweiten Abschnitts zum Schaltkontakt des dritten Abschnitts ebenfalls in der Umfangsrichtung um 120° versetzt ist.

Die Verschaltung bzw. Verdrahtung ist hier besonders einfach.

Es kann vorgesehen sein, dass
- wenigstens einer der Schaltkontakte an jeweils einem Kontaktträger aus Isolierstoff befestigt ist, der wiederum mit der Schaltwelle drehfest verbunden ist.

Es kann weiterhin ein Verfahren zum Betätigen einer Schaltanordnung vorgesehen sein, wobei
- ein Schaltmechanismus eines ersten Abschnitts, eines zweiten Abschnitts und eines dritten Abschnitts bewegt wird;
- durch die Bewegung des Schaltmechanismus in jedem Abschnitt ein beweglicher Schaltkontakt in jedem Abschnitt zwischen zwei unterschiedlichen und aufeinanderfolgenden Armen einer Wählerbrücke des jeweiligen Abschnitts angeordnet wird;
- die Schaltkontakte derart angeordnet ist, dass durch die Bewegung des Schaltmechanismus in Verbindung mit den Schaltkontakten in zwei Abschnitten die jeweilige Stammwicklung über einen Arm der Wählerbrücke und eine feste Verdrahtung elektrisch leitend kontaktiert wird.

Es kann vorgesehen sein, dass
- der Schaltmechanismus als eine Schaltwelle ausgebildet ist;
- jeder bewegliche Schaltkontakt bogenförmig ausgebildet ist;
- die Schaltwelle derart gedreht wird, dass in jedem Abschnitt der Schaltkontakt zwischen zwei unterschiedlichen und aufeinanderfolgenden Armen der jeweiligen Wählerbrücke angeordnet wird.

Es kann vorgesehen sein, dass
- der Schaltkontakt des ersten Abschnitts zum Schaltkontakt des zweiten Abschnitts in einer Umfangsrichtung um 120° versetzt ist;
- der Schaltkontakt des zweiten Abschnitts zum Schaltkontakt des dritten Abschnitts ebenfalls in einer Umfangsrichtung um 120° versetzt ist, so dass bei Drehung der Schaltwelle durch den Schaltkontakt in zwei Abschnitten die jeweiligen Stammwicklungen durch die Verdrahtung und über einen Arm der Wählerbrücke elektrisch leitend verbunden werden.

Bei einer besonders bevorzugten Ausführungsform, bei der die Verdrahtung bzw. Verschaltung der Abschnitte untereinander besonders einfach durchzuführen ist, ist der bewegliche und bogenförmige Schaltkontakt eines Abschnitts zu dem beweglichen und bogenförmigen Schaltkontakten der anderen Abschnitte um jeweils 120° in jedem der Abschnitte versetzt. So ist der bewegliche und bogenförmige Schaltkontakt des ersten Abschnitts zum beweglichen und bogenförmigen Schaltkontakt des zweiten Abschnitts in einer Umfangsrichtung um 120° versetzt. Der bewegliche und bogenförmige Schaltkontakt des zweiten Abschnitts ist zum beweglichen und bogenförmigen Schaltkontakt des dritten Abschnitts ebenfalls in einer Umfangsrichtung um 120° versetzt. Bei Drehung der Schaltwelle wird durch den beweglichen und bogenförmigen Schaltkontakt in zwei Abschnitten über die Verdrahtung bzw. Verschaltung ein Arm der Wählerbrücke mit der jeweiligen Stammwicklung elektrisch leitend verbunden.

Es kann weiterhin eine elektrische Anlage für ein dreiphasiges Wechselstromnetz vorgesehen sein, umfassend
- für jede Phase des Wechselstromnetzes einen Umspanner mit einer Primärseite und einer Sekundärseite;
- für jeden Umspanner ein separates Umspannergehäuse;
- eine Schaltanordnung, die an die Umspanner angeschlossen sind;
   wobei
- in jeder Phase die Primärseite und/oder Sekundärseite eine Stammwicklung und eine Regelwicklung aufweist;
- die Schaltanordnung derart ausgebildet ist, dass sie jede Regelwicklung mit jeder der Stammwicklungen verbinden kann;
- die Schaltanordnung in einem der Umspannergehäuse oder in einem eigenen Schaltgehäuse angeordnet ist.

Diese Anlage ermöglicht einen sehr platzsparenden Aufbau. Die einzelnen Umspanner können besonders kompakt gestaltet werden, sodass der Transport auf einfachen Bahnschienen erfolgen kann. Zusätzlich werden die Verdrahtung der Umspanner mit der Schaltanordnung begünstigt.

Jede Primärseite und/oder jede Sekundärseite kann auf beliebige Art und Wiese ausgebildet sein und beispielsweise eine Stammwicklung und eine Regelwicklung umfassen. Falls eine Seite, also beispielsweise die Primärseite oder die Sekundärseite, eine Stammwicklung und eine Regelwicklung umfasst, so kann die andere Seite, also die Sekundärseite oder Primärseite eine einzige Wicklung oder ebenfalls eine Stammwicklung und eine Regelwicklung umfassen. Vorzugsweise umfassen entweder die Primärseiten jeweils eine Stammwicklung und eine Regelwicklung und die Sekundärseiten jeweils eine einzige Wicklung oder die Sekundärseiten jeweils eine Stammwicklung und eine Regelwicklung und die Primärseiten jeweils eine einzige Wicklung.

Es kann vorgesehen sein, dass
- wenigstens eines der Umspannergehäuse und/oder das Schaltgehäuse mit einem Isoliermedium gefüllt ist.

Das Isoliermedium kann auf beliebige Art und Weise ausgebildet sein und beispielsweise wenigstens eine Flüssigkeit, bevorzugt ein Transformatorenöl oder ein Ester, und/oder wenigstens ein Gas, bevorzugt SF₆, umfassen.

Es kann weiterhin eine Schaltanordnung zur Verwendung in einer elektrischen Anlage, die gemäß der Erfindung ausgebildet ist, vorgesehen sein, wobei
- die Schaltanordnung zum Schalten wenigstens einer der oder der Regelwicklungen während des Betriebs der elektrischen Anlage auf jeweils eine der Stammwicklungen einer Phase ausgebildet ist oder dient;
- für jede zu schaltende Phase mindestens ein Abschnitt vorgesehen ist, in dem feste Kontakte angeordnet sind;
- die festen Kontakte in jedem Abschnitt durch jeweils einen beweglichen Schaltkontakt, der jeweils auf einem Schaltmechanismus befestigt ist, wahlweise beschaltbar sind,
eine erste elektrische Leitung, eine zweite elektrische Leitung und eine dritte elektrische Leitung die Kontakte in jedem Abschnitt derart leitend verbindet, dass die Kontakte der verschiedenen Abschnitte mittels der ersten, zweiten und dritten elektrischen Leitung jeweils einmal kontaktiert sind.Die Ausführungen und Erläuterungen zu einem der Aspekte der Erfindung, insbesondere zu einzelnen Merkmalen dieses Aspektes, gelten entsprechend auch analog für die anderen Aspekte der Erfindung.

Im Folgenden werden Ausführungsformen der Erfindung beispielhaft anhand der beigefügten Zeichnungen näher erläutert. Die daraus hervorgehenden einzelnen Merkmale sind jedoch nicht auf die einzelnen Ausführungsformen beschränkt, sondern können mit weiter oben beschriebenen einzelnen Merkmalen und/oder mit einzelnen Merkmalen anderer Ausführungsformen verbunden und/oder kombiniert werden. Die Einzelheiten in den Zeichnungen sind nur erläuternd, nicht aber beschränkend auszulegen. Die in den Ansprüchen enthaltenen Bezugszeichen sollen den Schutzbereich der Erfindung in keiner Weise beschränken, sondern verweisen lediglich auf die in den Zeichnungen gezeigten Ausführungsformen.

Die Zeichnungen zeigen in
- FIG. 1: eine erste Anlage für ein dreiphasiges Wechselstromnetz mit einer Schaltanordnung;
- FIG. 2: eine weitere elektrische Anlage mit einer Schaltanordnung;
- FIG. 3: eine erste Ausführungsform der Schaltanordnung;
- FIG. 4: eine zweite Ausführungsform der Schaltanordnung;
- FIG. 5: eine erste Ausführungsform eines Abschnitts der Schaltanordnung;
- FIG. 6: eine weitere Ansicht des Abschnitts der Schaltanordnung der FIG. 5;
- FIG. 7: eine zweite Ausführungsform des Abschnitts der Schaltanordnung;
- FIG. 8: die Schaltanordnung gemäß der zweiten Ausführungsform in einem ersten stationären Zustand, die an drei Umspanner angeschlossen ist;
- FIG. 9: die Schaltanordnung der FIG. 8 in einer ersten Schaltphase;
- FIG. 10: die Schaltanordnung der FIG. 8 in einer zweiten Schaltphase;
- FIG. 11: die Schaltanordnung der FIG. 8 in einer dritten Schaltphase;
- FIG. 12: die Schaltanordnung der FIG. 8 in einem zweiten stationären Zustand;
- FIG. 13: eine schematische Darstellung einer bekannten Schaltanordnung mit zwei "Advanced Retard Switch" (ARS).

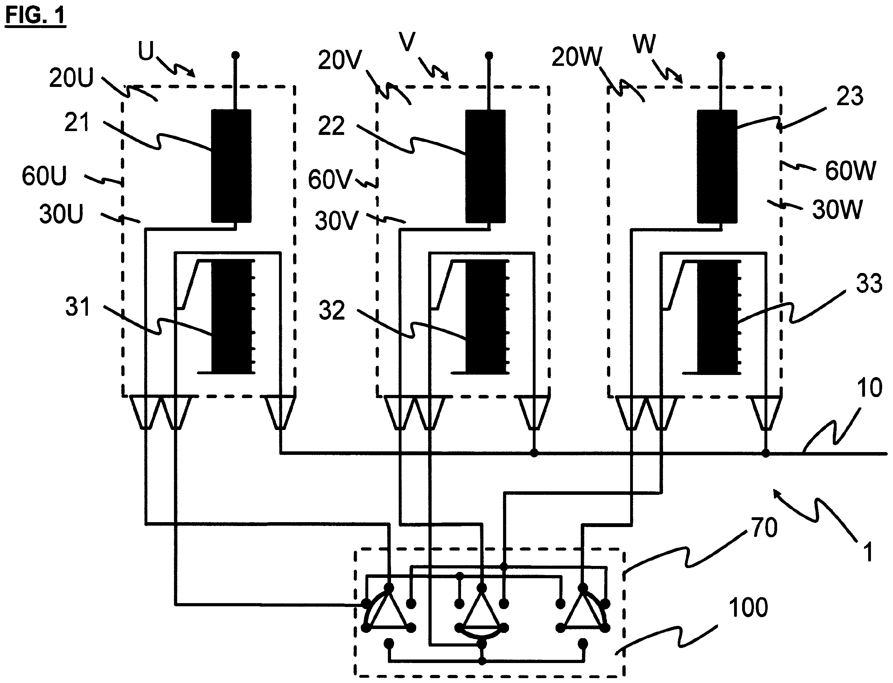

In FIG. 1 ist eine elektrische Anlage 1 für ein dreiphasiges Wechselstromnetz schematisch dargestellt.

Die elektrische Anlage 1 umfasst eine Schaltanordnung 100, für jede Phase U, V, W des Wechselstromnetzes einen Umspanner 20U, 20V, 20W und für jeden Umspanner 20U, 20V, 20W ein separates Umspannergehäuse 60U, 60V, 60W. Die den Phasen U, V, W zugeordneten Primärseiten 30U, 30V, 30W umfassen jeweils eine Stammwicklung 21, 22, 23 und eine Regelwicklung 31, 32, 33. Die Stammwicklungen 21, 22, 23 können mithilfe der Schaltanordnung 100 einzeln mit jeweils einer Regelwicklung 31, 32, 33 in Reihe geschaltet werden. Jede Regelwicklung 31, 32, 33 weist Anzapfungen auf, die durch einen hier nicht dargestellten Laststufenschalter beschaltet werden können. Zwischen jeder Stammwicklung 21, 22, 23 und jeder Regelwicklung 31, 32, 33 kann ein hier nicht dargestellter Vorwähler angeordnet sein. Dieser kann dazu verwendet werden, die Regelwicklung 31, 32, 33 wahlweise zur Stammwicklung 21, 22, 23 zu addieren oder von dieser zu subtrahieren. Zusätzlich weist jeder Umspanner 20U, 20V, 20W eine hier nicht dargestellte Sekundärseite auf, die eine von der Primärseite 30U, 30V, 30W galvanisch getrennte einzelne Regelwicklung umfasst. In jedem Umspannergehäuse 60U, 60V, 60W sind die jeweiligen Primärseite 30U, 30V, 30W und die Sekundärseite angeordnet. Die Umspannergehäuse 60U, 60V, 60W sind beispielhaft mit einem Ester als flüssigem Isoliermedium gefüllt.

Bei dieser Ausführungsform ist die Schaltanordnung 100 derart mit den Stammwicklungen 21, 22, 23 und den Regelwicklungen 31, 32, 33 verschaltet, dass jede Regelwicklung 31, 32, 33 wahlweise mit der jeweils zugeordneten oder einer anderen Stammwicklung 21, 22, 23 beschaltbar ist. Die Schaltanordnung 100 ist in einem separaten Schaltgehäuse 70 angeordnet. Auch das Schaltgehäuse 70 ist beispielhaft mit einem Ester als flüssigem Isoliermedium gefüllt. Die Regelwicklungen 31, 32, 33 sind mit einem Sternpunkt 10 elektrisch leitend verbunden.

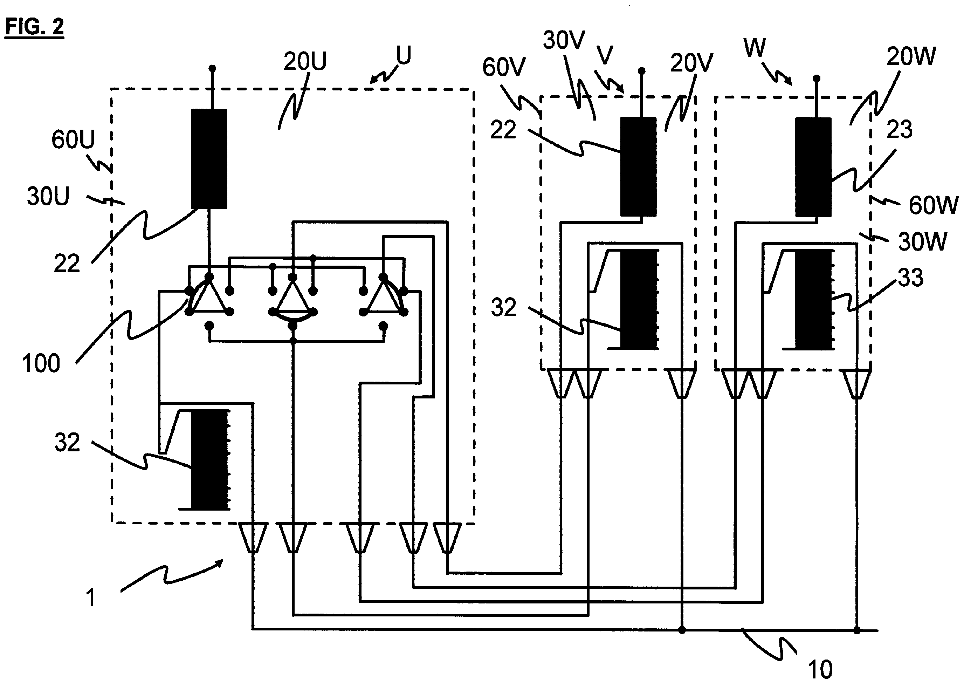

In FIG. 2 ist eine weitere Anlage 1 schematisch dargestellt. Diese zweite Ausführungsform ähnelt der ersten Ausführungsform, sodass im Folgenden vor Allem die Unterschiede näher erläutert werden.

Bei dieser Ausführungsform entfällt das separate Schaltgehäuse 70 und ist die Schaltanordnung 100 beispielhaft in dem Umspannergehäuse 60U angeordnet, kann nach Bedarf aber auch in einem der beiden anderen Umspannergehäuse 60V, 60W angeordnet sein.

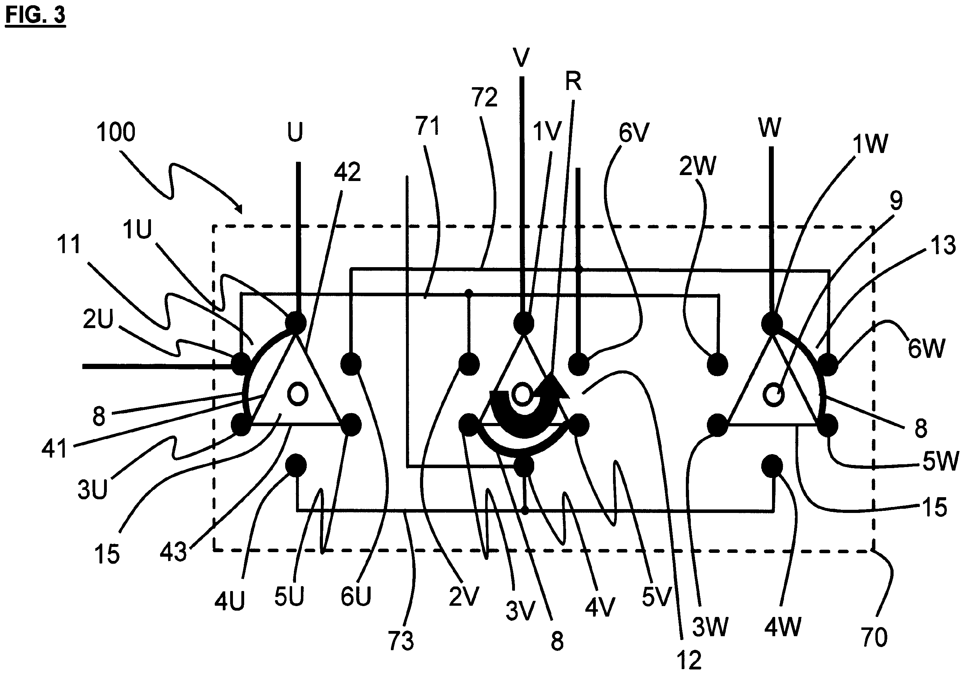

In FIG. 3 ist die Schaltanordnung 100 der elektrischen Anlage 1 der FIG. 1 schematisch dargestellt.

Die Schaltanordnung 100 umfasst für jede zu schaltende Phase U, V, W einen Abschnitt 11, 12, 13, in dem feste Kontakte 1U, 1V, 1W; 2U, 2V, 2W; 3U, 3V, 3W; 4U, 4V, 4W; 5U, 5V, 5W; 6U, 6V, 6W angeordnet sind, in jedem Abschnitt 11, 12, 13 einen beweglichen Schaltkontakt 8, einen Schaltmechanismus 9 und drei elektrische Leitungen 71, 72, 73.

In jedem Abschnitt 11, 12, 13 sind die festen Kontakte 1U, ..., 6W durch jeweils einen bogenförmigen beweglichen Schaltkontakt 8, der auf dem Schaltmechanismus 9 befestigt ist, wahlweise beschaltbar. In jedem Abschnitt 11, 12, 13 verbinden die erste elektrische Leitung 71, die zweite elektrische Leitung 72 und die dritte elektrische Leitung 73 die Kontakte 1U, ..., 6W derart leitend, dass die Kontakte 1U, ..., 6W der verschiedenen Abschnitte 11, 12, 13 mittels der elektrischen Leitungen 71, 72, 73 jeweils einmal kontaktiert sind.

Die Schaltanordnung 100 ermöglicht eine einfache Verdrahtung der Abschnitte 11, 12, 13 mit den ersten Leitungen 71, 72, 73. Mit der Schaltanordnung 100 soll und kann, wie in FIG. 1 dargestellt ist, eine erste Stammwicklung 21 der ersten Phase U, eine zweite Stammwicklung 22 der zweiten Phase V und eine dritte Stammwicklung 23 der dritten Phase W mit einer ersten Regelwicklung 31, einer zweiten Regelwicklung 32 und einer dritten Regelwicklung 33 der drei Umspanner 20U, 20V, 20W wahlweise beschaltet werden.

Bei dieser Ausführungsform umfasst jeder der drei Abschnitte 11, 12, 13 eine Wählerbrücke 15 mit drei Armen 41, 42, 43, über die er jeweils über eine feste Verdrahtung elektrisch leitend mit der zugeordneten Stammwicklung 21, 22, 23 verbunden ist. Jede Wählerbrücke 15 bildet ein, bevorzugt gleichseitiges, Dreieck.

In FIG. 3 ist die Schaltanordnung 100 in einem stationären Zustand dargestellt. Der Schaltmechanismus, der beispielhaft eine Schaltwelle 9 umfasst, trägt für jeden Abschnitt 11, 12, 13 einen einzigen Schaltkontakt 8. In der dargestellten Stellung dieses stationären Zustandes kontaktiert der Schaltkontakt 8 des ersten Abschnitts 11 die festen Kontakte 1U, 2U, 3U und verbindet elektrisch leitend die erste Regelwicklung 31 mit der ersten Stammwicklung 21 über diese festen Kontakte 1U, 2U, 3U und die zugeordnete Wählerbrücke 15. Der Schaltkontakt 8 des zweiten Abschnitts 12 kontaktiert in dieser dargestellten Stellung die festen Kontakte 3V, 4V, 5V und verbindet elektrisch leitend die zweite Regelwicklung 32 mit der zweiten Stammwicklung 22 über diese festen Kontakte 3V, 4V, 5V und die zugeordnete Wählerbrücke 15. Der Schaltkontakt 8 des dritten Abschnitts 13 kontaktiert in dieser dargestellten Stellung die festen Kontakte 5W, 6W, 1W und verbindet elektrisch leitend die dritte Regelwicklung 33 mit der dritten Stammwicklung 23 über diese festen Kontakte 5W, 6W, 1W und die zugeordnete Wählerbrücke 15.

Bei dieser Ausführungsform ist der Schaltkontakt 8 des ersten Abschnitts 11 zum Schaltkontakt 8 des zweiten Abschnitts 12 um 120° in einer Umfangsrichtung R um die Schaltwelle 9 versetzt. Ebenso ist der Schaltkontakt 8 des zweiten Abschnitts 12 zum Schaltkontakt 8 des dritten Abschnitts 13 um 120° in der Umfangsrichtung R versetzt.

Diese Anordnung ermöglicht eine einfache und leicht zu überschauende Verdrahtung der festen Kontakte 1U, ..., 6W der Abschnitte 11, 12, 13. Ebenso werden bei der Verdrahtung Fehler vermieden oder zumindest reduziert.

Das oben beschriebene Versetzen der Schaltkontakte 8 der Abschnitte 11, 12, 13 ist lediglich eine mögliche Ausführungsform und nicht zwingend erforderlich. Die Schaltkontakte 8 in den jeweiligen Abschnitten 11, 12, 13 können auch ohne Versetzung an der Schaltwelle 9 angebracht sein. In diesem Fall müssen die Leitungen 71, 72 und 73 entsprechend anders verschaltet werden.

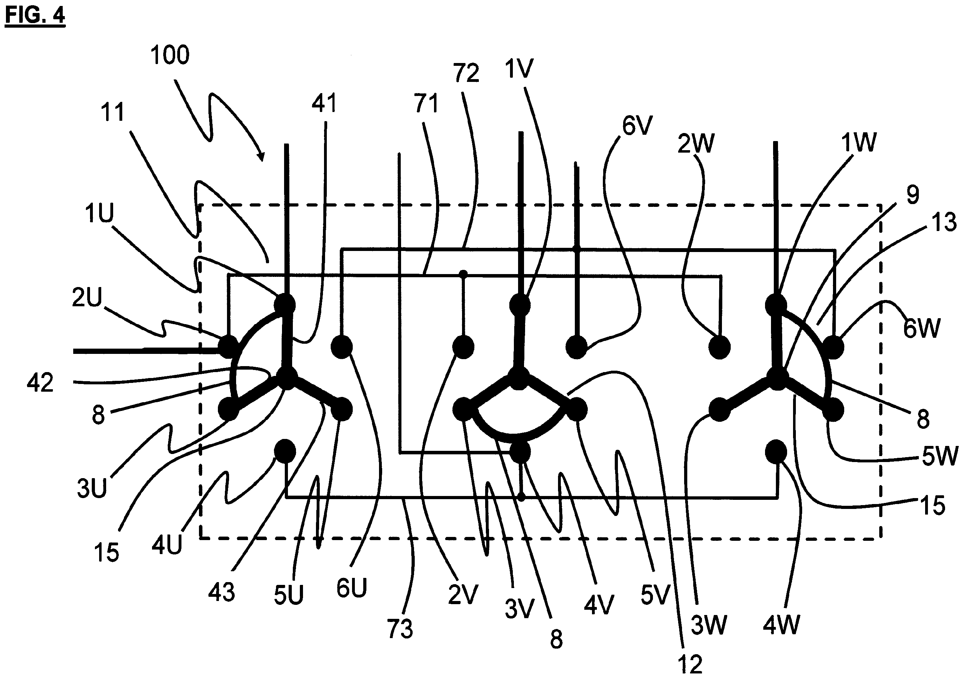

In FIG. 4 ist eine zweite Ausführungsform der Schaltanordnung 100 schematisch dargestellt. Diese zweite Ausführungsform ähnelt der ersten Ausführungsform, sodass im Folgenden vor Allem die Unterschiede näher erläutert werden.

Bei dieser Ausführungsform bildet jede Wählerbrücke 15 einen dreizackigen Stern.

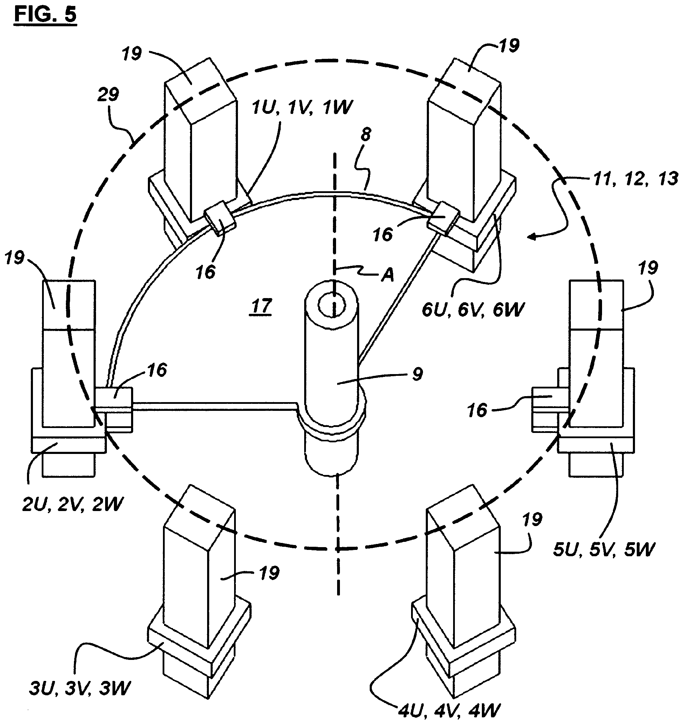

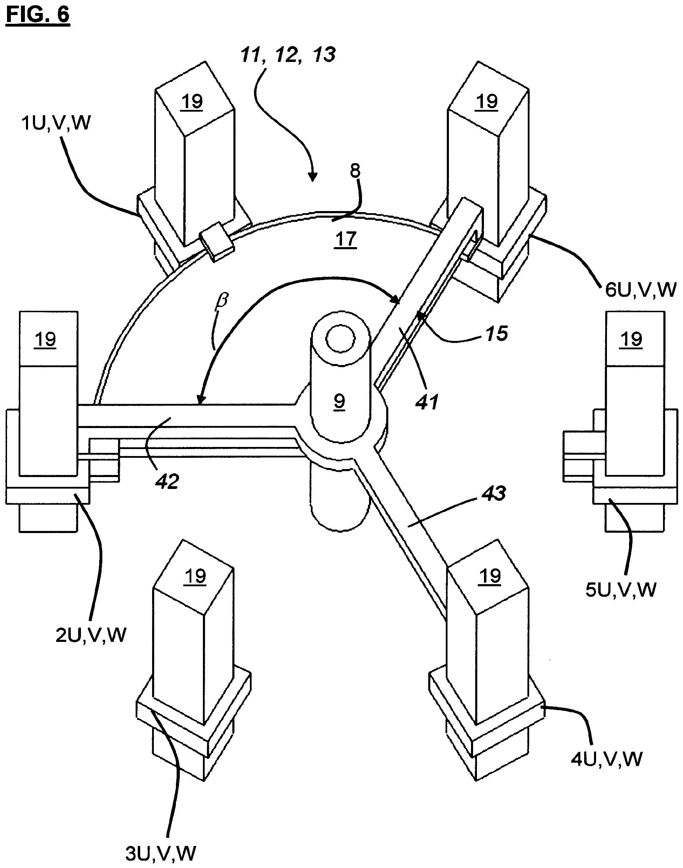

In FIG. 5 und 6 ist eine erste Ausführungsform eines der Abschnitte 11, 12, 13 der Schaltanordnung 100 in einer perspektivischen Ansicht schematisch dargestellt, wobei in FIG. 5 die Wählerbrücke 15 nicht dargestellt ist. Bei der Schaltanordnung 100 sind die Abschnitte 11, 12, 13 in Form einer Schaltsäule in Richtung einer Achse A, die der Längsachse der Schaltwelle 9 entspricht, angeordnet.

Bei dieser Ausführungsform sind die Abschnitte 11, 12, 13 aus einem gemeinsamen Isolierstoffgerüst gebildet, das eine Vielzahl parallel zueinander angeordneter Kontaktstäbe 19 umfasst. Bei der hier gezeigten Anordnung sind die Kontaktstäbe 19 auf einem Kreisring 29 angeordnet. Bei der hier dargestellten Ausführungsform sind sechs Kontaktstäbe 19 für alle drei Abschnitte der 11, 12, 13 vorgesehen. In unterschiedlichen und zueinander parallelen Ebenen sind die jeweiligen festen Kontakte 1U, ..., 6W an den sechs Kontaktstäben 19 befestigt. Es ist ebenfalls möglich, dass weitere Kontaktstäbe ohne feste Kontakte vorgesehen sind, die für eine bessere mechanische Stabilität sorgen. Jeder Abschnitt 11, 12, 13 ist für eine zu schaltende Phase U, V, W vorgesehen. Die noch freien Kontaktstäbe 19 sind sogenannte Leerstäbe, die zur Verbesserung, wie bereits oben erwähnt, der Steifigkeit der gesamten Schaltanordnung 100 dienen. Zentrisch befindet sich in der Schaltanordnung 100, und somit in jedem Abschnitt 11, 12, 13, die Schaltwelle 9, die in jedem Abschnitt 11, 12, 13 einen Kontaktträger 17 trägt, der an ihr drehfest befestigt ist. An jedem dieser Kontaktträger 17 ist jeweils der bogenförmige Schaltkontakt 8 befestigt. Der Schaltkontakt 8 erstreckt sich in dieser Ausführungsform über einen Kreisbogen von ungefähr 120°, so dass in jedem Abschnitt 11, 12, 13 jeweils Kontaktfinger 16 von drei benachbarten festen Kontakten 1U, ..., 6W im stationären Zustand gleichzeitig kontaktiert werden, so dass die benachbarten festen Kontakte 1U, ..., 6W dadurch elektrisch leitend miteinander verbunden sind.

Die Schaltwelle 9 wird durch einen nicht dargestellten Antrieb betätigt. Jeder Schaltkontakt 8 besteht aus massivem, elektrisch leitendem Material, vorzugsweise Kupfer. Die Kontaktstäbe 19 und die Kontaktträger 17 bestehen aus elektrisch isolierendem Material.

In jedem der Abschnitte 11, 12, 13 ist eine Wählerbrücke 15 (FIG. 6) vorgesehen. Die Wählerbrücke 15 umfasst in dieser Ausführungsform einen ersten Arm 41, einen zweiten Arm 42 und einen dritten Arm 43. Bei jeder Wählerbrücke 15 können diese, wie hier dargestellt, als dreizackiger Stern oder aber, wie beispielsweise in FIG. 1 bis 3 dargestellt, als Dreieck angeordnet sein. Gemäß einer möglichen Ausführungsform kann sich die Wählerbrücke 15 gleichzeitig mit dem Schaltkontakt 8 drehen. Die Arme 41, 42, 43 sind unter einem Winkel β zueinander angeordnet und verbinden jeden zweiten festen Kontakt 2U, 2V, 2W; 4U, 4V, 4W; 6U, 6V, 6W leitend mit der jeweiligen Stammwicklung 21, 22, 23. In der hier dargestellten Ausführungsform beträgt der Winkel β 120°.

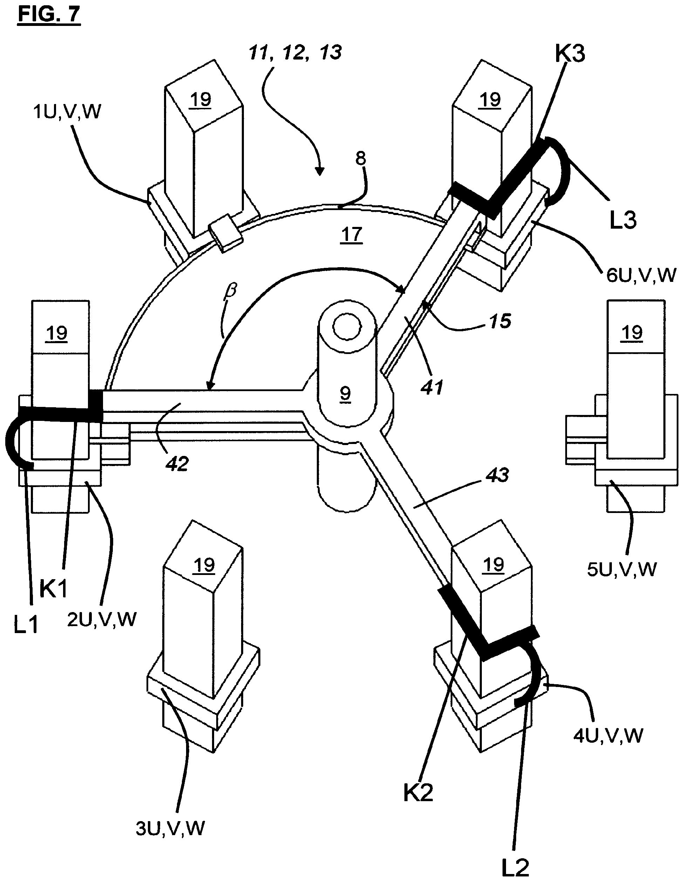

In FIG. 7 ist eine zweite Ausführungsform eines der Abschnitte 11, 12, 13 der Schaltanordnung 100 in einer perspektivischen Ansicht schematisch dargestellt. Diese zweite Ausführungsform ähnelt der ersten Ausführungsform, sodass im Folgenden vor Allem die Unterschiede näher erläutert werden.

Bei dieser Ausführungsform ist die leitende Verbindung zwischen dem ersten Arm 41, dem zweiten Arm 42 und dem dritten Arm 43 und den jeweiligen Stammwicklungen 21, 22, 23 mittels zusätzlicher Festkontakte K1, K2, K3 in jedem der Abschnitte 11, 12, 13 realisiert. Zusätzlich sind diese Festkontakte K1, K2, K3 mit den auf denselben Kontaktstäben 19 angeordneten festen Kontakten 2U, 2V, 2W; 4U, 4V, 4W; 6U, 6V, 6W mittels Verbindungsleitungen L1, L2, L3 elektrisch leitend verbunden.

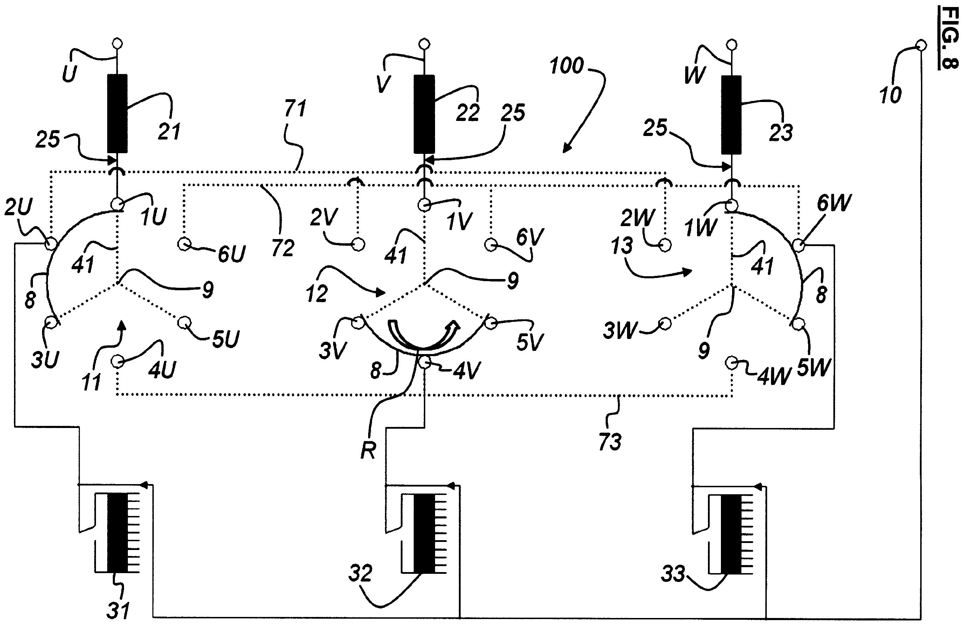

In FIG. 8, 9, 10, 11 und 12 sind die Stammwicklungen 21, 22, 23 und die Regelwicklungen 31, 32, 33 von drei Umspannern und die Schaltanordnung 100 gemäß der zweiten Ausführungsform in unterschiedlichen Schaltphasen schematisch dargestellt.

FIG. 8 zeigt die Schaltanordnung 100 in einem ersten stationären Zustand. Mit der Schaltanordnung 100 soll eine erste Stammwicklung 21 der ersten Phase U, eine zweite Stammwicklung 22 der zweiten Phase V und eine dritte Stammwicklung der dritten Phase W mit einer ersten Regelwicklung 31, einer zweiten Regelwicklung 32 und einer dritten Regelwicklung 33 wahlweise beschaltet werden. Die Regelwicklungen 31, 32, 33 sind mit einem Sternpunkt 10 elektrisch leitend verbunden. Wie bereits oben erwähnt, kann jede Regelwicklung 31, 32, 33 als Grobwicklung oder als Regelwicklung ausgebildet sein.

Jeder der drei Abschnitte 11, 12, 13 besitzt eine Wählerbrücke 15 (siehe FIG. 6, 7), die über den ersten Arm 41 der Wählerbrücke 15 fest mit der ersten Stammwicklung 21, der zweiten Stammwicklung 21 und der dritte Stammwicklung 23 jeweils über eine feste Verdrahtung 25 elektrisch leitend mit dem ersten Abschnitt 11, dem zweiten Abschnitt 12 bzw. dem dritten Abschnitt 13 verbunden ist.

In dem ersten stationären Zustand der FIG. 8 trägt der Schaltmechanismus des ersten Abschnitts 11, der eine Schaltwelle 9 ist, einen einzigen beweglichen und bogenförmigen Schaltkontakt 8. In dieser Stellung kontaktiert der Schaltkontakt 8 die festen Kontakte 1U, 2U, 3U und verbindet elektrisch leitend die erste Regelwicklung 31 mit der ersten Stammwicklung 21. Die Schaltwelle 9 des zweiten Abschnitts 12 trägt ebenfalls einen einzigen beweglichen und bogenförmigen Schaltkontakt 8, der in dieser Stellung die festen Kontakte 3V, 4V, 5V kontaktiert und die zweite Regelwicklung 32 mit der zweiten Stammwicklung 22 elektrisch leitend verbindet. Die Schaltwelle 9 des dritten Abschnitts 13 trägt ebenfalls einen einzigen beweglichen und bogenförmigen Schaltkontakt 8, der in dieser Stellung die festen Kontakte 1W, 6W, 5W kontaktiert und die dritte Regelwicklung 32 mit der dritten Stammwicklung 23 elektrisch leitend verbindet.

Bei dieser Ausführungsform ist der Schaltkontakt 8 des ersten Abschnitts 11 zum Schaltkontakt 8 des zweiten Abschnitts 12 in einer Umfangsrichtung R um 120° versetzt. Ebenso ist der Schaltkontakt 8 des zweiten Abschnitts 12 zum Schaltkontakt 8 des dritten Abschnitts 13 in der Umfangsrichtung R um 120° versetzt. Diese Anordnung ermöglicht eine einfache und leicht zu überschauende Verdrahtung bzw. Verschaltung der festen Kontakte 1U,..., 6W der drei Abschnitte 11, 12, 13. Ebenso ist das Auftreten von Fehlern bei der Verdrahtung bzw. Verschaltung reduziert beziehungsweise werden Fehler vermieden. Das oben beschriebene Versetzen der Schaltkontakte 8 der jeweiligen Abschnitte 11, 12, 13 ist lediglich eine mögliche Ausführungsform und ist nicht zwingend erforderlich. Die Schaltkontakte 8 in den jeweiligen Abschnitten 11, 12, 13 können auch ohne Versetzung an der Schaltwelle 9 angebracht sein. In diesem Fall müssen die Leitungen 71, 72, 73 entsprechend anders verschaltet werden.

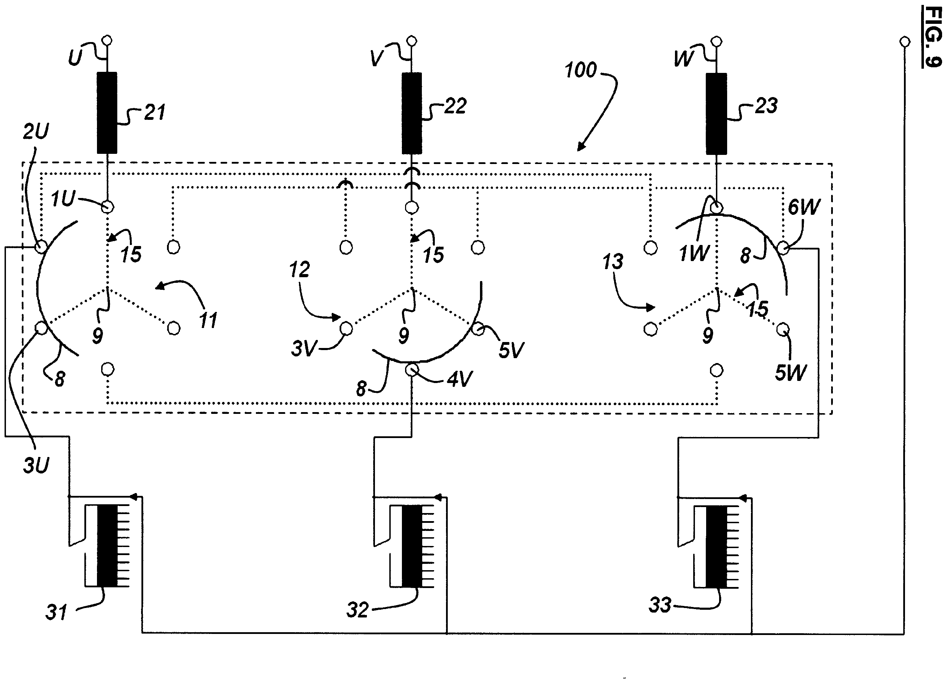

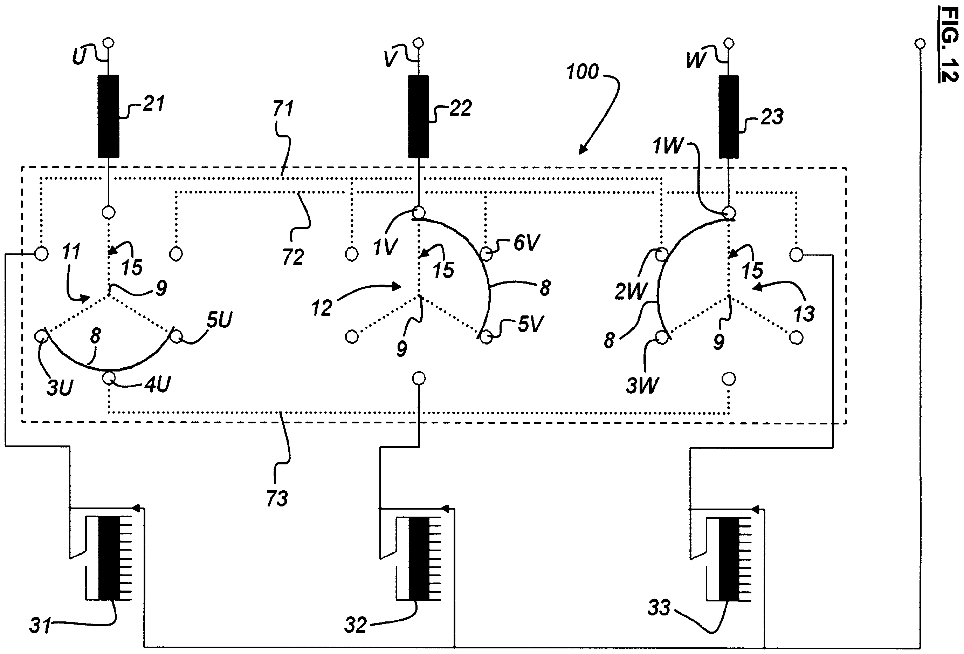

FIG. 9 bis 11 zeigen die Umschaltung von dem in FIG. 8 gezeigten ersten stationären Zustand auf den in FIG. 12 dargestellten zweiten stationären FIG. 8.

FIG. 9 zeigt die Schaltanordnung 100 in einer ersten Schaltphase. Die Schaltwelle 9 dreht hier beispielsweise im Gegenurzeigersinn. Ob die Schaltwelle 9 im Uhrzeigersinn oder Gegenurzeigersinn gedreht wird, ist für die Erfindung unerheblich. Das Maß der Drehung der Schaltwelle 9 beträgt 30°. Im ersten Abschnitt 11 hat das Schaltelement 8 den ersten festen Kontakt 1U verlassen und kontaktiert weiterhin den zweiten festen Kontakt 2U und den dritten festen Kontakt 3U. In dieser Stellung des Schaltelements 8 ist die erste Regelwicklung 31 weiterhin über die elektrisch leitende Wählerbrücke 15 mit der ersten Stammwicklung 21 verbunden. Im zweiten Abschnitt 12 hat das Schaltelement 8 den dritten festen Kontakt 3V verlassen und kontaktiert weiterhin den vierten festen Kontakt 4V und den fünften festen Kontakt 5V. In dieser Stellung des Schaltelements 8 ist die zweite Regelwicklung 32 weiterhin über die elektrisch leitende Wählerbrücke 15 mit der zweiten Stammwicklung 22 verbunden. Im dritten Abschnitt 13 hat das Schaltelement 8 den fünften festen Kontakt 5W verlassen und kontaktiert weiterhin den sechsten festen Kontakt 6W und den ersten festen Kontakt 1W. In dieser Stellung des Schaltelements 8 ist die dritte Regelwicklung 32 weiterhin über die elektrisch leitende Wählerbrücke 15 mit der dritten Stammwicklung 23 verbunden.

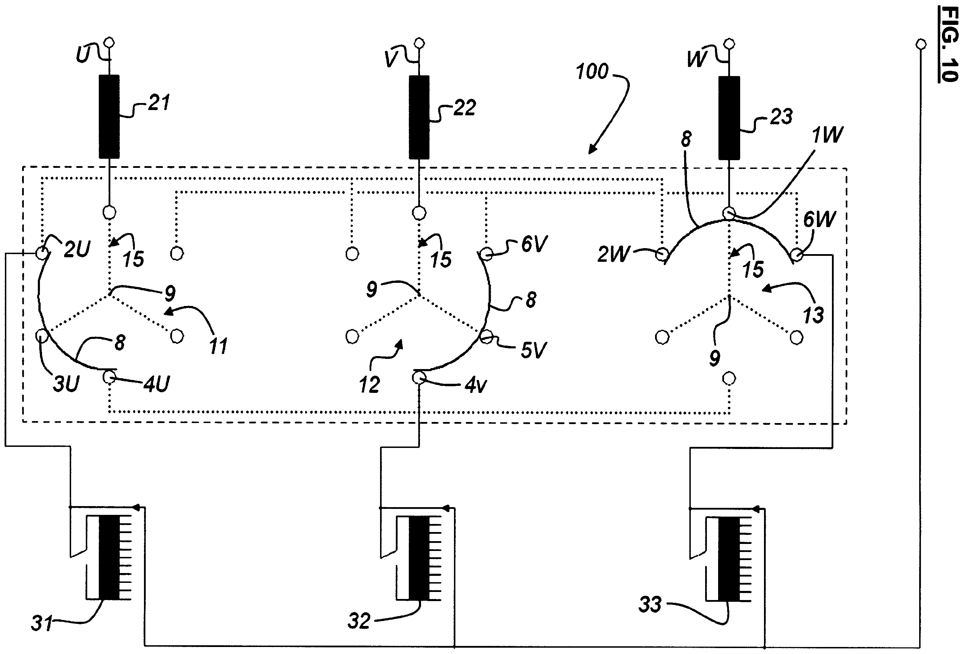

FIG. 10 zeigt die Schaltanordnung 100 in einer zweiten Schaltphase. Das Maß der Drehung der Schaltwelle 9 beträgt 60°. Die Schaltwelle 9 dreht sich weiter im Gegenurzeigersinn. Im ersten Abschnitt 11 hat das Schaltelement 8 nun Kontakt mit dem zweiten festen Kontakt 2U, dem dritten festen Kontakt 3U und dem vierten festen Kontakt 4U. In dieser Stellung des Schaltelements 8 ist die erste Regelwicklung 31 weiterhin über die elektrisch leitende Wählerbrücke 15 mit der ersten Stammwicklung 21 verbunden. Im zweiten Abschnitt 12 hat das Schaltelement 8 nun Kontakt mit dem vierten festen Kontakt 4V, dem fünften festen Kontakt 5V und dem sechsten festen Kontakt 6V. In dieser Stellung des Schaltelements 8 ist die zweite Regelwicklung 32 weiterhin über die elektrisch leitende Wählerbrücke 15 mit der zweiten Stammwicklung 22 verbunden. Im dritten Abschnitt 13 hat das Schaltelement 8 nun Kontakt mit dem sechsten festen Kontakt 6W, dem ersten festen Kontakt 1W und dem zweiten festen Kontakt 2W. In dieser Stellung des Schaltelements 8 ist die dritte Regelwicklung 33 weiterhin über die elektrisch leitende Wählerbrücke 15 mit der dritten Stammwicklung 23 verbunden.

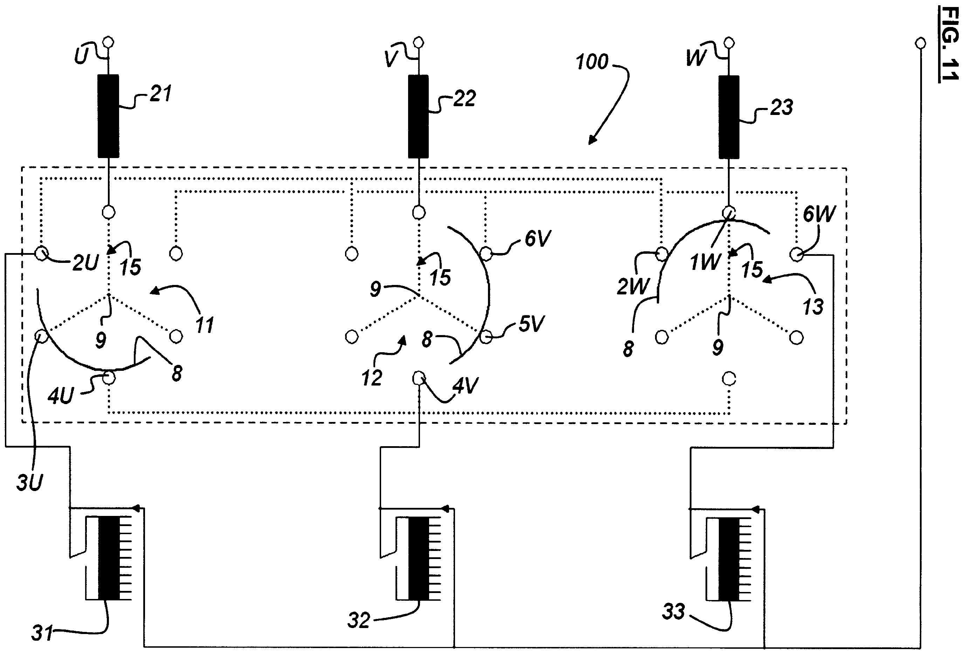

FIG. 11 zeigt die Schaltanordnung 100 in einer dritten Schaltphase. Das Maß der Drehung der Schaltwelle 9 beträgt nun 90°. Die Schaltwelle 9 dreht sich weiter im Gegenurzeigersinn. Im ersten Abschnitt 11 hat das Schaltelement 8 nun den zweiten festen Kontakt 2U verlassen und ist noch mit dem dritten festen Kontakt 3U und dem vierten festen Kontakt 4U in Kontakt. In dieser Stellung des Schaltelements 8 ist die erste Regelwicklung 31 nicht mehr in Kontakt mit der ersten Stammwicklung 21. Im zweiten Abschnitt 12 hat das Schaltelement 8 nun den vierten festen Kontakt 4V verlassen und ist noch mit dem fünften festen Kontakt 5V und dem sechsten festen Kontakt 6V in Kontakt. In dieser Stellung des Schaltelements 8 ist die zweite Regelwicklung 32 nicht mehr in Kontakt mit der zweiten Stammwicklung 22. Im dritten Abschnitt 13 hat das Schaltelement 8 nun den sechsten Kontakt 6W verlassen und ist noch mit dem ersten festen Kontakt 1W und dem zweiten festen Kontakt 2W in Kontakt. In dieser Stellung des Schaltelements 8 ist die dritte Regelwicklung 33 nicht mehr in Kontakt mit der dritten Stammwicklung 23.

FIG. 12 zeigt die Schaltanordnung 100 in einem zweiten stationären Zustand als Abschluss der in FIG. 9 bis 11 gezeigten Schaltphasen. Das Maß der Drehung der Schaltwelle 9 beträgt nun 120° im Gegenuhrzeigersinn. Um diesen zweiten stationären Zustand zu erreichen, dreht die Schaltwelle 9 gegenüber der dritten Schaltphase aus FIG. 11 um weitere 30° im Gegenurzeigersinn. Im ersten Abschnitt 11 ist das Schaltelement 8 in Kontakt mit dem dritten festen Kontakt 3U, dem vierten festen Kontakt 4U und dem fünften Kontakt 5U. In dieser Stellung des Schaltelements 8 ist die zweite Regelwicklung 32 über die dritte elektrische Leitung 73 und die Wählerbrücke 15 mit der ersten Stammwicklung 21 verbunden. Im zweiten Abschnitt 12 ist das Schaltelement 8 in Kontakt mit dem fünften festen Kontakt 5V, dem sechsten festen Kontakt 6V und dem ersten festen Kontakt 1V. In dieser Stellung des Schaltelements 8 ist die dritte Regelwicklung 33 über die zweite elektrische Leitung 72 und die Wählerbrücke 15 mit der zweiten Stammwicklung 22 verbunden. Im dritten Abschnitt 13 ist das Schaltelement 8 in Kontakt mit dem ersten festen Kontakt 1W, dem zweiten festen Kontakt 2W und dem dritten festen Kontakt 3W. In dieser Stellung des Schaltelements 8 ist die erste Regelwicklung 31 über die erste elektrische Leitung 71 und die Wählerbrücke 15 mit der dritten Stammwicklung 23 verbunden.

Die Drehung der Schaltwelle 9 vom einem stationären Zustand zum nächsten stationären Zustand soll in einem Schritt mittels einer kontinuierlichen Bewegung durchgeführt werden. Eine schrittweise Drehung der Schaltwelle 9 ist, wie in FIG. 9 bis 11 beschrieben, möglich. Hiermit könnte eine Überprüfung der Funktionalität der Schaltwelle 9 durchgeführt werden. Bei dem nicht dargestellten dritten stationären Zustand, hat sich die Schaltwelle 9 um weitere 120° gedreht. Im ersten Abschnitt 11 ist das Schaltelement 8 in Kontakt mit dem fünften festen Kontakt 5U, dem sechsten festen Kontakt 6U und dem ersten festen Kontakt 1U. In dieser Stellung des Schaltelements 8 ist die dritte Regelwicklung 33 über die zweite elektrische Leitung 72 und die Wählerbrücke 15 mit der ersten Stammwicklung 21 verbunden. Im zweiten Abschnitt 12 ist das Schaltelement 8 in Kontakt mit dem ersten festen Kontakt 1V, dem zweiten festen Kontakt 2V und dem dritten festen Kontakt 3V. In dieser Stellung des Schaltelements 8 ist die erste Regelwicklung 31 über die erste elektrische Leitung 71 und die Wählerbrücke 15 mit der zweiten Stammwicklung 22 verbunden. Im dritten Abschnitt 13 ist das Schaltelement 8 in Kontakt mit dem dritten festen Kontakt 3W, dem vierten festen Kontakt 4W und dem fünften festen Kontakt 5W. In dieser Stellung des Schaltelements 8 ist die zweite Regelwicklung 32 über die dritte elektrische Leitung 72 und die Wählerbrücke 15 mit der dritten Stammwicklung 23 verbunden.

Durch die Schaltanordnung 100 und die Verschaltung bzw. Verdrahtung der Abschnitte 11, 12, 13 ist es möglich, aus einem aktuellen stationären Zustand, in dem beispielsweise die erste Stammwicklung 21 mit der ersten Regelwicklung 31, die zweite Stammwicklung 22 mit der zweiten Regelwicklung 32 und die dritte Stammwicklung 23 mit der dritten Regelwicklung 33 verschaltet ist, durch eine Wahl der Drehrichtung des Schaltmechanismus 9 die jeweiligen Stammwicklungen 21, 22, 23 mit der jeweils benachbarten Regelwicklung 33, 31, 32 "links" oder der jeweils benachbarten Regelwicklung 32, 33, 31 "rechts" zu verbinden. Die Schaltanordnung 100 arbeitet während des Transformatorbetriebs. Ein Abschalten des Transformators ist nicht erforderlich.

### BEZUGSZEICHEN

- 1: elektrische Anlage
- 1U/1V/1W: erster fester Kontakt einer Phase
- 2U/2V/2W: zweiter fester Kontakt einer Phase
- 3U/3V/3W: dritter fester Kontakt einer Phase
- 4U/4V/4W: vierter fester Kontakt einer Phase
- 5U/5V/5W: fünfter fester Kontakt einer Phase
- 6U/6V/6W: sechster fester Kontakt einer Phase
- 8: beweglicher Schaltkontakt
- 9: Schaltmechanismus, Schaltwelle
- 10: Sternpunkt
- 11: erster Abschnitt
- 12: zweiter Abschnitt
- 13: dritter Abschnitt
- 15: Wählerbrücke
- 16: Kontaktfinger
- 17: Kontaktträger
- 19: Kontaktstäbe
- 20U/20V/20W: Umspanner
- 21: erste Stammwicklung
- 22: zweite Stammwicklung
- 23: dritte Stammwicklung
- 29: Kreisring
- 30U/30V/30W: Primärseite
- 31: erste Regelwicklung
- 32: zweite Regelwicklung
- 33: dritte Regelwicklung
- 41: erster Arm der Wählerbrücke
- 42: zweiter Arm der Wählerbrücke
- 43: dritter Arm der Wählerbrücke
- 60U/60V/60W: Umspannergehäuse
- 70: Schaltgehäuse
- 71: erste elektrische Leitung
- 72: zweite elektrische Leitung
- 73: dritte elektrische Leitung
- 100: Schaltanordnung
- A: Achse
- α: Winkel
- β: Winkel
- R: Umfangsrichtung
- K1, K2, K3: Festkontakte
- L1, L2, L3: Verbindungsleitung
- U, V, W: Phasen

## Patentansprüche

1. Schaltanordnung (100) zum Schalten einer von mindestens drei Wicklungen (31, 32, 33) während des Transformatorbetriebes auf jeweils eine von drei Stammwicklungen (21, 22, 23) einer Phase (U, V, W), wobei
- für jede zu schaltende Phase (U, V, W) mindestens ein Abschnitt (11, 12, 13) vorgesehen ist, in dem feste Kontakte (2U, 2V, 2W; 4U, 4V, 4W; 6U, 6V, 6W) angeordnet sind;
- die festen Kontakte (2U...W; 4U...W; 6U...W) in jedem Abschnitt (11, 12, 13) durch jeweils einen beweglichen Schaltkontakt (8), der jeweils auf einem Schaltmechanismus (9) befestigt ist, wahlweise beschaltbar sind;
**dadurch gekennzeichnet, dass**
- eine erste elektrische Leitung (71), eine zweite elektrische Leitung (72) und eine dritte elektrische Leitung (73) die Kontakte (2U...W; 4U...W; 6U...W) in jedem Abschnitt (11, 12, 13) derart leitend verbinden, dass die Kontakte (2U...W; 4U...W; 6U...W) der verschiedenen Abschnitte (11, 12, 13) mittels der ersten, zweiten und dritten elektrischen Leitung (71, 72, 73) jeweils einmal kontaktiert sind, sodass jede der Stammwicklungen (21, 22, 23) wahlweise mit jeder der Wicklungen (31, 32, 33) beschaltbar ist.

2. Schaltanordnung (100) nach dem vorigen Anspruch, wobei
- die erste Stammwicklung (21) über eine feste Verdrahtung (25) mit dem ersten Abschnitt (11) verbunden ist;
- die zweite Stammwicklung (22) über eine feste Verdrahtung (25) mit dem zweiten Abschnitt (12) verbunden ist;
- die dritte Stammwicklung (23) über eine feste Verdrahtung (25) mit dem dritten Abschnitt (13) verbunden ist;
- mit dem Schaltmechanismus (9) der ersten Stammwicklung (21) oder der zweiten Stammwicklung (22) oder der dritten Stammwicklung (23) die erste Wicklung (31) oder die zweite Wicklung (32) oder die dritte Wicklung (33) leitend verbindbar ist.

3. Schaltanordnung (100) nach einem der vorigen Ansprüche, wobei
- jeder der drei Abschnitte (11, 12, 13) eine leitende Wählerbrücke (15) aufweist, die über die Verdrahtung (25) mit der jeweiligen Stammwicklung (21, 22, 23) verbunden ist.

4. Schaltanordnung (100) nach einem der vorigen Ansprüche, wobei
- die erste elektrische Leitung (71) jeweils einen Kontakt (2U...W) eines jeden Abschnitts (11, 12, 13), die zweite elektrische Leitung (72) jeweils einen Kontakt (4U...W) eines jeden Abschnitts (11, 12, 13) und die dritte elektrische Leitung (73) jeweils einen Kontakt (6U...W) eines jeden Abschnitts (11, 12, 13) verbindet.

5. Schaltanordnung (100) nach einem der vorigen Ansprüche, wobei
- ein allen Abschnitten (11, 12, 13) gemeinsames Isolierstoffgerüst aus mehreren Kontaktstäben (19) vorgesehen ist und zumindest einige der Kontaktstäbe (19) die festen Kontakte (1U...W; 2U...W; 3U...W; 4U...W; 5U...W; 6U...W) tragen; und/oder
- der Schaltmechanismus (9) eine drehbare Schaltwelle (9) ist oder umfasst, auf der die entsprechenden Abschnitte (11, 12, 13) zentrisch angeordnet sind.

6. Schaltanordnung (100) nach einem der vorigen Ansprüche, wobei
- jede Wählerbrücke eine innere Wählerbrücke (15) ist, die einen ersten Arm (41), einen zweiten Arm (42) und einen dritten Arm (43) aufweist, die jeweils unter einem Winkel (β) zueinander angeordnet sind;
- der erste Arm (41) über die feste Verdrahtung (25) mit der jeweiligen Stammwicklung (21, 22, 23) verbunden ist.

7. Schaltanordnung (100) nach einem der vorigen Ansprüche, wobei
- die Abschnitte (11, 12, 13) übereinander in Richtung einer Achse (A) der Schaltwelle (9) angeordnet sind; und/oder
- jeder bewegliche Schaltkontakt (8) bogenförmig ausgebildet ist.

8. Schaltanordnung (100) nach einem der vorigen Ansprüche, wobei
- wenigstens einer der Schaltkontakte (8) einen Kreisbogen derart bildet, dass der Schaltkontakt (8) drei aufeinanderfolgende Kontakte (1U...W; 2U...W; 3U...W; 4U...W; 5U...W; 6U...W) des jeweiligen Abschnitts (11, 12, 13) über Kontaktfinger (16) der Kontakte (1U...W; 2U...W; 3U...W; 4U...W; 5U...W; 6U...W) kontaktiert;
- der Schaltkontakt (8) des ersten Abschnitts (11) zum Schaltkontakt (8) des zweiten Abschnitts (12) in einer Umfangsrichtung (R) um 120° versetzt ist;
- der Schaltkontakt (8) des zweiten Abschnitts (12) zum Schaltkontakt (8) des dritten Abschnitts (13) ebenfalls in der Umfangsrichtung (R) um 120° versetzt ist.

9. Schaltanordnung (100) nach einem der vorigen Ansprüche, wobei
- wenigstens einer der Schaltkontakte (8) an jeweils einem Kontaktträger (17) aus Isolierstoff befestigt ist, der wiederum mit der Schaltwelle (9) drehfest verbunden ist.

## Claims

1. Switching device (100) for switching one of at least three windings (31, 32, 33) during transformer operation to in each case one of three main windings (21, 22, 23) of a phase (U, V, W), wherein
- at least one section (11, 12, 13) is provided for each phase (U, V, W) to be switched, in which section (11, 12, 13) fixed contacts (1U, 1V, 1W; 2U, 2V, 2W; 3U, 3V, 3W; 4U, 4V, 4W; 5U, 5V, 5W; 6U, 6V, 6W) are arranged;
- the fixed contacts (1U...W; 2U...W; 3U...W; 4U...W; 5U...W; 6U...W) are selectably connectible in each section (11, 12, 13) by a respective movable switch contact (8) each fastened on a switching mechanism (9);
**characterised in that**
- a first electric line (71), a second electric line (72) and a third electric line (73) conductively connect the contacts (1U...W; 2U...W; 3U...W; 4U...W; 5U...W; 6U...W) in each section (11, 12, 13) such that the contacts (1U...W; 2U...W; 3U...W; 4U...W; 5U...W; 6U...W) of the various sections (11, 12, 13) are contacted once in each case by means of the first, second, and third electric line (71, 72, 73) so that each of the main windings (21, 22, 23) is selectably connectible with each of the windings (31, 32, 33).

2. Switching device (100) according to the preceding claim, wherein
- the first main winding (21) is connected with the first section (11) via a hard wiring (25);
- the second main winding (22) is connected with the second section (12) via a hard wiring (25);
- the third main winding (23) is connected with the third section (13) via a hard wiring (25); and
- the first winding (31) or the second winding (32) or the third winding (33) is conductively connectible with the switching mechanism (9) of the first main winding (21) or of the second main winding (22) or of the third main winding (23).

3. Switching device (100) according to one of the preceding claims, wherein
- each of the three sections (11, 12, 13) has a conductive selector bridge (15), which is connected with the respective main winding (21, 22, 23) via the wiring (25).

4. Switching device (100) according to any one of the preceding claims, wherein
- the first electric line (71) in each case connects a respective contact (2U...W) of each section (11, 12, 13), the second electric line (72) connects a respective contact (4U...W) of each section (11, 12, 13) and the third electric line (73) connects a respective contact (6U...W) of each section (11, 12, 13).

5. Switching device (100) according to any one of the preceding claims, wherein
- an insulating material structure common to all sections (11, 12, 14) and consisting of a plurality of contact bars (19) is provided and at least some of the contact bars (19) carry the fixed contacts (1U...W; 2U...W; 3U...W; 4U...W; 5U...W; 6U...W); and/or
- the switching mechanism (9) is or comprises a rotatable switching shaft (9) on which the corresponding sections (11, 12, 13) are centrally arranged.

6. Switching device (100) according to any one of the preceding claims, wherein
- each selector bridge is an internal selector bridge (15) having a first arm (41), a second arm (42) and a third arm (43), which are each arranged at an angle (β) to one another; and
- the first arm (41) is connected with the respective main winding (21, 22, 23) via the hard wiring (25).

7. Switching device (100) according to any one of the preceding claims, wherein
- the sections (11, 12, 13) are arranged one above the other in the direction of an axis (A) of the switching shaft (9); and/or
- each movable switch contact (8) is formed to be curved.

8. Switching device (100) according to any one of the preceding claims, wherein
- at least one of the switch contacts (8) forms an arc such that the switch contact (8) contacts three successive contacts (1U...W; 2U...W; 3U...W; 4U...W; 5U...W; 6U...W) of the respective section (11, 12, 13) via contact fingers (16) of the contacts (1U...W; 2U...W; 3U...W; 4U...W; 5U...W; 6U...W);
- the switch contact (8) of the first section (11) is offset by 120 degrees in a peripheral direction (R) in relation to the switch contact (8) of the second section (12); and
- the switch contact (8) of the second section (12) is also offset by 120 degrees in the peripheral direction (R) in relation to the switch contact (8) of the third section (13).

9. Switching device (100) according to any one of the preceding claims, wherein
- at least one of the switch contacts (8) is fastened to a respective contact carrier (17) of insulating material, which contact carrier (17) is in turn non-rotatably connected with the switching shaft (9).

## Revendications

1. Dispositif de commutation (100) pour commuter au moins l'un des trois enroulements (31, 32, 33) pendant le fonctionnement du transformateur sur chaque fois l'un des trois enroulements de base (21, 22, 23) d'une phase (U, V, W), selon lequel :
- pour chaque phase à commuter (U, V, W) il est prévu un segment (11, 12, 13) comportant des contacts fixes (2U, 2V, 2W, 4U, 4V, 4W, 6U, 6V, 6W), les contacts fixes (2U... W ; 4U...W ; 6U...W) de chaque segment (11, 12, 13) étant commutables sélectivement chacun par un contact de commutation mobile (8) fixé sur un mécanisme de commutation (9),
**caractérisé en ce que**
- une première ligne électrique (71), une seconde ligne électrique (72) et une troisième ligne électrique (73) relient de façon conductrice, les conducteurs (2U...W ; 4U...W ; 6U...W) de chaque segment (11, 12, 13) de façon que les contacts (2U...W ; 4U...W ; 6U...W) des différents segments (11, 12, 13) soient chacun, une fois en contact à l'aide de la première, de la seconde et de la troisième ligne électrique (71, 72, 73) pour que chacun des enroulements de base (21, 22, 23) puisse être commuté sélectivement sur chacun des enroulements (31, 32, 33).

2. Dispositif de commutation (100) selon l'une des revendications précédentes,
dans lequel :
- le premier enroulement de base (21) est relié par un câblage fixe (25) au premier segment (11),
- le second enroulement de base (22) est relié par un câblage fixe (25) au second segment (12),
- le troisième enroulement base (23) est relié par un câblage fixe (25) au troisième segment (13),
- le mécanisme de commutation (9) relie le premier enroulement base (21) ou le second enroulement base (22) ou le troisième enroulement base (23) au premier enroulement (31) ou au second enroulement (32)ou au troisième enroulement (33).

3. Dispositif de commutation (100) selon l'une des revendications précédentes,
selon lequel :
- chacun des trois segments (11, 12, 13) a un pont sélecteur conducteur (15) relié par le câblage (25) à l'enroulement de base respectif (21, 22, 23).

4. Dispositif de commutation (100) selon l'une des revendications précédentes,
selon lequel :
- le premier conducteur électrique (71) relie respectivement un contact (2U...W) de chaque segment (11, 12, 13), le second conducteur électrique (72) relie chaque fois un contact (4U...W) de chaque segment (11, 12, 13) et le troisième conducteur électrique (73) relie chaque fois un contact (6U...W) de chaque segment (11, 12, 13).

5. Dispositif de commutation (100) selon les revendications précédentes, selon lequel :
- tous les segments (11, 12, 13) ont un châssis commun en matière isolante, formé de plusieurs tiges de contact (19) et au moins certaines des tiges de contact (19) portent les contacts fixes (1U...W, 2U...W ; 3U...W ; 4U...W ; 5U... W ; 6U...W),
- le mécanisme de commutation (9) étant ou comportant un arbre de commutation (9) rotatif portant de manière centrée, les segments correspondants (11, 12, 13).

6. Dispositif de commutation (100) selon l'une des revendications précédentes,
selon lequel :
- chaque pont sélecteur est un pont sélecteur intérieur (15) ayant un premier bras (41), un second bras (42) et un troisième bras (43) disposés les uns par rapport aux autres selon un angle (β),
- le premier bras (41) est relié à un enroulement de base respectif (21, 22, 23) par le câblage fixe (25).

7. Dispositif de commutation (100) selon l'une des revendications précédentes,
selon lequel :
- les segments (11, 12, 13) sont superposés dans la direction l'axe (A) de la commutation (9), et/ou
- chaque contact de commutation (8), mobile est de forme courbe.

8. Dispositif de commutation (100) selon l'une des revendications précédentes,
selon lequel :
- au moins l'un des contacts de commutation (8) forme un arc de cercle pour que le contact de commutation (8) puisse entrer en contact avec trois des contacts successifs (1U...W, 2U...W ; 3U...W ; 4U...W ; 5U...W ; 6U...W) du segment respectif (11, 12, 13) par un doigt contact (16) des contacts (1U...W ; 2U...W ; 3U...W ; 4U...W ; 5U...W ; 6U...W),
- le contact de commutation (8) du premier segment (11) est décalé par rapport au contact de commutation (8) du second segment (12) de 120° dans la direction périphérique (R),
- le contact de commutation (8) du second segment (12) est décalé par rapport au contact de commutation (8) du troisième segment (13) de 120° également dans la direction périphérique(R).

9. Dispositif de commutation (100) selon l'une des revendications précédentes,
selon lequel :
- au moins l'un des contacts de commutation (8) est fixé respectivement à un support de contact (17) en un matériau isolant, lui-même relié solidairement en rotation à l'arbre de commutation (9).
